# NEW EUROPEAN PATENT SPECIFICATION

(11) **EP 0 815 062 B2**
(45) Date of publication and mention of the opposition decision: **19.08.2009**
(45) Mention of the grant of the patent: 02.02.2000
(21) Application number: 96907449.1
(22) Date of filing: 13.03.1996
(51) Int. Cl.: C03C 13/00, C03C 1/02, C03B 3/00, C03B 5/16

(54) **METHOD OF MAKING MINERAL FIBRES**
VERFAHREN ZUR HERSTELLUNG VON MINERALFASERN
PROCEDE DE FABRICATION DE FIBRES MINERALES

(30) Priority: 14.03.1995 GB 9505153
(43) Date of publication of application: 07.01.1998
(73) Proprietor: Rockwool International A/S, 2640 Hedehusene (DK)
(72) Inventor: JENSEN, Soren, Lund, DK-2840 Holte (DK); CHRISTENSEN, Vermund, Rust, DK-4000 Roskilde (DK); JENSEN, Leif, Moller, DK-4000 Roskilde (DK)
(74) Representative: Samuels, Lucy Alice
(86) International application number: PCT/EP1996/001063
(87) International publication number: WO 1996/028395

(56) References cited:
- EP-A- 0 495 897
- WO-A-92/04289
- WO-A-93/22251
- FR-A- 2 690 438
- GB-A- 2 027 690
- US-A- 4 661 119
- US-A- 4 969 940
- PATENT ABSTRACTS OF JAPAN vol. 13, no. 487 (C-649) [3835] , 6 November 1989 & JP,A,01 192743 (NIPPON STEEL CHEM CO LTD), 2 August 1989,
- CHEMICAL ABSTRACTS, vol. 98, no. 8, 21 February 1983 Columbus, Ohio, US; abstract no. 58810d, page 284; XP002007739 & SU,A,947 112 (ALL UNION RESEARCH INSTITUTE) 30 June 1982
- PAUL D. GARNA: 'Academic Press', 1965 article 'Thermoanalytical methods of Investigation.'
- 'Production of vandium - bearing pig iron with the use of highly basic sinter. Stal in english 1969 (8) 687 - 691' 1969,
- 'Le rendement en silicium des briquettes de ferrosilicium.' FONDERIE-FONDEUR D'AUJOURD'HUI 76 June 1988 - July 1988,

## Description

This invention relates to methods for the production of mineral fibre materials. In particular it is useful in the production of mineral fibres having content of phosphorus, boron or alkali metal.

It is well known to provide man-made vitreous fibres (MMVF) by a process comprising melting in a furnace a charge comprising suitable raw materials to form a melt and forming fibres from the melt. The raw materials may comprise mineral materials in the form of finely ground or coarse particulate material. Recently it has become known to provide mineral materials in the form of moulded briquettes of particulate mineral material. Briquettes are a convenient form in which to charge mineral materials, in particular those which tend to be available in fine particulate form.

Generally when briquettes are used it is standard practice to provide a single type of briquette only, that is to provide all briquettes with the same chemical analysis. When certain materials such as phosphorus and boron are included in the charge it is generally convenient to provide a high proportion of the total charge in briquette form, for instance three quarters or substantially all of the charge. In particular, we believe that increasing need in the future for careful control of the chemical analysis of the melt will lead to increasing use of briquettes as a means of providing most or nearly all of the required mineral materials for the charge.

Once it is decided that briquettes are to carry a large proportion of the required mineral components into the melt it becomes necessary for the briquettes to have a complex chemical analysis. This is particularly the case for melts intended to produce fibre compositions which have become desirable of late, for instance those containing phosphorus and/or boron and/or alkali metals. In briquettes containing a large number of chemical components, there is a high risk of eutectics being formed between groups of chemical components which result in lowering the melting temperature of the briquette. Some materials or combinations of materials can induce phase separation in the melt.

The quality of the fibres produced is influenced by the quality of the melt exiting the furnace for formation into fibres. To obtain high quality fibres it is important to achieve a regular flow of melt from the furnace at controlled or constant viscosity and temperature. In particular it is important that the melt which exits the furnace is at a suitably high temperature.

It is particularly important to minimise pressure variations in the furnace and to control the temperature of the melt, in particular to minimise the pressure decrease over the melting zone, in order to permit maintenance of controlled conditions.

In a cupola furnace the melting process is strongly influenced by the flow of air from the tuyeres at the bottom of the furnace through the charge to the exhaust at the top of the furnace. This air flow is highly dependent upon the amount of free space between the coke and the mineral materials making up the charge. In a cupola furnace the air flow is disrupted when the amount of this space becomes too low. In such a situation the pressure drop across the charge increases, as do pressure variations. This results in variations in the flow of melt through the furnace outlet onto the fibre-forming equipment.

To avoid this situation it is important that the raw materials are able to retain adequate resistance to compression (compression strength) at furnace temperatures. If compression strength is reduced at a rather low furnace temperature (for instance around 1,200°C) the raw materials become compressed by further materials entering the furnace above them and the free space between the materials is reduced. Compression strength at furnace temperatures is related to the melting point (and in particular the initial melting point) of a particular component. Compression strength of a briquette is reduced when parts of it begin to melt, so lower melting point materials will tend to have a lower compression strength at a given temperature than higher melting point materials.

Therefore the creation of low melting eutectics and consequent reduction in the melting temperature of briquettes making up a substantial proportion of the charge can lead to a serious reduction in compression strength. This results in the charge becoming compressed and reduces the potential air flow space, disrupting air flow and pressure control. If the charge materials melt too rapidly the charge may tend to collapse. The melt then becomes viscous and the melt exiting the furnace is inhomogeneous and has too low a temperature.

It would be desirable to be able to provide the complex compositions which are now particularly commercially desirable without disrupting melting and air flow, in particular in cupola furnaces. It would also be particularly desirable to be able to achieve this without sacrificing the convenience and benefits of using briquettes as a means of providing charge materials.

In the invention we overcome the problems of the prior art by splitting the component of the charge which is provided in the form of briquettes. We thus provide at least two types of briquette in the charge and can ensure that a sufficient proportion of the charge is in briquettes which have melting point suitably high to support the remainder of the charge, even if some of the remainder has very low melting point and low resistance to compression.

According to the invention there is provided a method of making MMV fibres comprising melting in a furnace raw materials to produce a mineral melt and forming fibres from the melt,
in which the raw material charge includes a mixture of at least two types of briquette (a) and (b), of size at least 50 mm, each type of briquette having a different chemical analysis, and at least 30 wt% of the raw material charge is provided by briquettes (b)
and in which either
(1) briquette (a) has an initial melting temperature of 1,240°C or below and briquette (b) has an initial melting temperature of 1,200°C or greater and the initial melting temperature of briquette (b) is at least 20°C greater than the initial melting temperature of briquette (a),
or
(2) the briquettes have an overall chemical analysis which when provided in the form of a single type of briquette gives an initial melting temperature (I), and in which briquettes (b) have an initial melting temperature which is at least 20°C greater than initial melting temperature (I).

Often, briquettes comply with both definition (1) and definition (2).

We find that by use of the invention it is possible to provide the briquette component of a charge in the form of briquettes of at least two types and thus to ensure that at least 30% of the charge has melting temperature high enough to avoid the melt and air flow problems discussed above. Thus this proportion of the charge can support other components and prevent the charge from collapsing. This is achieved at the same time as providing an overall briquette chemical analysis which could lead to formation of eutectics and low melting point if the entire composition were present in a single briquette. Thus complex chemical analyses for melts can be achieved in the invention whilst retaining the convenience of providing a significant proportion of the charge in the form of briquettes.

In this specification the initial melting temperature (IMT) is measured by differential thermal analysis (DTA). This well-established method is described by Paul D. Garn in "Thermoanalytical Methods of Investigation", Academic Press, 1965, pp 16-52. The briquettes used in the method of the invention are a mixture of several mineral materials and consequently do not in general melt at a single temperature but over a range of temperatures. For the purposes of the commercially used melting process it is the temperature at which melting begins which is particularly important. This is the initial melting temperature, which is defined as the temperature at which the first endotherm peak occurs.

IMT is measured as follows:

Materials are provided in the same proportions as those in the briquette to be analysed. These materials are ground or crushed to a particle size of below 100 µm. The ground or crushed material is mixed to ensure it is homogeneous. A 50 mg sample is used for the DTA experiment, which is carried out using a heating rate of 10°C/minute.

In the method of the invention "briquettes" are bodies formed by agglomeration of particulate mineral material, which have a compression strength sufficient to enable the briquettes to be transported. The process of forming briquettes of particulate mineral material generally comprises the steps of addition to the particulate mineral materials of a suitable binder, mixing, compacting/shaping and curing etc to achieve the required quality.

In the invention the briquettes generally have a size of at least 50 mm. The "size" of a component as used in the specification is the maximum sieve hole size through which not more than 10% of the component will pass. That is, a material having a size of at least 50 mm is such that at least 90% by weight of the material is retained on a sieve having holes of size of 50 mm. Preferably the briquettes have a size of at least 80 mm. Preferably at least 90% by weight of the briquettes pass through a sieve of hole size 300 mm, more preferably 250 mm, most preferably 200 mm, and in particular 160 mm.

In the invention, the briquette component of the charge comprises a mixture of at least two types of briquette. A "type" of briquette is one which has a specified chemical analysis. Different types of briquettes will have different chemical analyses. Briquettes of the same type may be produced from different basic materials, provided that the final chemical analysis of the briquette as a whole is the same. It is however preferred that all briquettes of the same type are made up from the same set of raw materials.

In the invention the briquettes (b) have high melting point in comparison with other components of the charge or in comparison with the melting point which would be exhibited by the overall briquette composition. These high melting briquettes (b) provide at least 30 wt% of the total charge, preferably at least 50 wt%.

In the invention the briquettes (b) can be provided so as to have an IMT of at least 1,200°C and in combination with briquettes (a) which have IMT of 1,240°C or below, the IMT of briquettes (b) being at least 20°C greater than the IMT of briquettes (a).

Therefore the charge comprises briquettes (a) which melt at a low temperature and have a tendency to be compressed. Briquettes (b) melt at a higher temperature and thus travel further down the furnace whilst retaining their structure. This facilitates retention of adequate interstices between the raw materials and the coke and enables the air to flow evenly from the tuyeres to the exhaust through the charge.

Briquettes (a) always have IMT below 1,240°C. Usually this is below 1,220°C, more generally below 1,200°C, often below 1,190°C. Briquettes having IMTs at the lower temperatures (1,200°C and below) will tend to lead to air flow problems and consequent melt flow problems in almost all furnaces. Combination of these briquettes with briquettes (b) generally alleviates these problems.

Briquettes (b) always have an initial melting temperature above 1,200°C and at least 20°C greater than the IMT of briquettes (a). In certain furnaces, and where the IMT of component (a) is particularly low, an IMT of component (b) of 1,200°C or greater, more often 1,220°C or greater gives adequate results. Generally however the IMT of component (b) is 1,240°C or greater, preferably 1,250°C or greater, more preferably 1,260°C or greater.

Preferably briquettes (b) have IMT at least 30 or 40°C greater than the IMT of component (a).

Alternatively, in the invention splitting of the briquettes may be based on the IMT (I) of a single briquette formed from a composition having the chemical analysis of the overall briquette composition. The invention is particularly useful where IMT (I) is 1,240°C or below, preferably 1,220°C or below. Particular benefits are seen when the overall chemical analysis would give an IMT (I) of 1,200°C or below, in particular 1,190°C or below.

In this aspect, the mixture of briquettes gives an overall chemical analysis which has its own IMT (I) if present in a single briquette.

At least two types of briquette must be present. Three, four or even five types of briquette or more may be included. Preferably however not more than three types, and in particular only two types of briquette are included in the charge.

The mixture of briquettes is such that they comprise briquettes (b), which make up at least 30 wt%, usually at least 50 wt%, of the total charge, and which have an IMT increased relative to IMT (I). They have IMT at least 20°C above IMT (I). Preferably the increased IMT is at least 30°C, more preferably at least 40°C, above IMT (I).

The fraction (b) having this required IMT can comprise briquettes of various different IMT's. It can also comprise briquettes of different types having the same IMT. Preferably however in the process the briquettes are such that those having the same IMT are all of the same type.

The briquettes (b) of IMT increased relative to IMT (I) provide at least 30 wt%, preferably at least 50 wt% and more preferably at least 75 wt% of the total briquettes.

It is preferred that at least 50 wt% of the total briquettes have IMT 1,200°C or greater, preferably 1,220°C or greater, more preferably 1,240°C or greater. IMT may be as high as 1,250°C or greater, and even above 1,260°C.

It is permissible for some briquettes, for instance up to 70 wt% of the briquettes, to have IMT below IMT (I). Preferably however 40 wt% or less, more preferably 20 wt% or less, most preferably 10 wt% or less of the briquettes have IMT below IMT (I). It is possible for substantially none of the briquettes to have IMT below IMT (I).

Preferably no briquettes have IMT more than 30°C, more preferably more than 20°C, most preferably more than 10°C, below IMT (I). In particular, the lower the IMT of the briquettes the more desirable it is for the proportion of these in the charge to be low.

It is also permissible to include in the charge some briquettes which have IMT the same as IMT (I). Preferably not more than 40 wt%, more preferably not more than 20 wt%, more preferably not more than 10 wt% of the briquettes, have this IMT. In particular it is preferred that substantially zero briquettes have this IMT.

In general it is preferred that the at least two types of briquette are such that they all have IMT above IMT (I). If there are at least two types of briquette having IMT above IMT (I), then preferably the difference between their IMT's is at least 20°C, preferably at least 30°C, often at least 40°C.

In the invention it is preferred that from around 40 to 100 wt% of the total charge is in the form of briquettes. Preferably at least 50 wt%, more preferably at least 70 wt% and most preferably up to 90 or 95 wt% or more of the total charge is in the form of briquettes. It can be desirable to use a charge which is made up only of briquettes and lime, the lime being included in amounts up to around 10 or 20 wt%.

The remainder of the charge can be formed from for instance crushed rock, such as basalt or diabase. Crushed rock is generally provided in a form having a size of at least 50 mm. Preferably 90% by weight of any crushed rock is retained on a sieve of hole size 80 mm. In general at least 90% by weight of any crushed rock passes through a sieve of hole size 300 mm; preferably at least 90% by weight passes through a sieve of hole size 250 mm; more preferably at least 90% by weight passes through a sieve of hole size 200 mm. In particular it is preferred that any crushed rock has a size such that at least 90% by weight is retained by a sieve of hole size 80 mm, and at least 90% by weight passes through a sieve of size 160 mm.

Crushed rock is generally present in an amount of 40 wt% or less, based on the total charge, preferably 30 wt% or less, more preferably 20 wt% or less, most preferably 10 wt% or less.

Raw materials in other forms, for instance finely ground particulate materials, may be included in minor amounts, generally 10 wt% of the charge or less. Preferably the amount of fine particulate material is substantially zero. Lime can also be included in amounts up to 10 or 20 wt%.

The process of the invention can be used to produce any desired fibre composition.

A preferred chemical analysis of the melt, and often of the overall briquette mixture, is as follows, in which all iron is measured as FeO:

| | |
|---|---|
| SiO₂ | 40 to 65 wt% |
| Al₂O₃ | 0 to 6 wt% |
| TiO₂ | 0 to 6 wt% |
| FeO | 2 to 15 wt% |
| CaO | 5 to 35 wt% |
| MgO | 2 to 18 wt% |
| Na₂O | 0.1 to 12 wt% |
| K₂O | 0.1 to 10 wt% |
| P₂O₅ | 0.1 to 10 wt% |
| B₂O₃ | 0 to 12 wt%. |

Further suitable analyses include those disclosed and exemplified in WO95/29135, WO95/21799, DE 4,417,230, DE 4,427,368, EP-A-495,897, EP-A-558,548 and WO93/22251.

A further suitable analysis for the fibres and briquettes is as follows, in which all iron is expressed as FeO:

| | |
|---|---|
| SiO₂ | 32 to 48 wt% |
| Al₂O₃ | 10 to 30 wt%, preferably 18 to 30 wt% |
| CaO | 10 to 30 wt% |
| MgO | 2 to 20 wt% |
| FeO | 2 to 15 wt% |
| Na₂O+K₂O | 0 to 12 wt%, preferably 0 to 10 wt% |
| TiO₂ | 0 to 6 wt% |
| Other Elements | 0 to 15 wt%. |

Suitable analyses include those disclosed and exemplified in the unpublished international applications PCT/EP95/04395.

As explained above, in a briquette mixture of complex chemical analysis various components tend to create eutectics and contribute to lowered melting points. In particular we find that large amounts of iron and phosphorus together contribute to melting and phase separation, for instance about 3 to about 12 wt% iron and about 3 to about 10 wt% phosphorus. Boron tends to lower the melting point of briquettes in which it is included, and thus is usually confined predominantly to lower melting point briquettes. We also find that the presence of sodium and other alkali metals often contributes to a low melting eutectic. For instance, more than about 5 wt% alkali metal together can be problematic. Consequently materials which combine to form a low melting eutectic can be separated into different briquette types. Thus for instance a briquette type containing a high iron content will generally have a low or zero phosphorus content. Similarly, a briquette having high sodium content may have raised alumina content.

We also find that certain compositions result in a low IMT (I) but contain no component which would generally be described as a fluxing agent. Those skilled in the art will be able to formulate briquette types appropriately to achieve the desired values of IMT.

Suitable raw materials for forming the briquettes include soda; iron ore; boron-containing materials; phosphorus-containing materials such as apatite; dolomite, quartz sand; olivine sand; mineral wool or other waste material recycled from the manufacture of MMVF; limestone; rutile; magnesite; magnetite; brucite, bauxite, kaolin, ilmenite, slag material, glass waste material, industrial waste materials, cement or other binder.

Briquettes may be produced in any known and suitable manner.

The method of the invention is useful in any type of furnace which can be used to melt raw materials for making MMV fibres. The invention is particularly useful in shaft and cupola furnaces, especially in cupola furnaces, which present a special problem in regulation of melt flow where low melting materials are used.

In the method of the invention the fibres may be formed in any known way. Suitable methods include the spinning cup rotor system and the multiple rotor cascade system.

The products produced in the method of the invention can be used in any application for which mineral wool is known, for instance as thermal insulation, fire insulation and protection, noise reduction and regulation, growing media, reinforcement of other products, plastics, etc, and as a filler.

The invention will now be illustrated with reference to the following examples:

### Example 1

Raw materials were provided and melted in a cupola furnace. The melt was formed into fibres using a cascade spinner.

The charge comprised the following:

| Briquette 1 comprising | |
|---|---|
| Cement | 9.0% |
| iron ore | 18.0% |
| dolomite | 2.0% |
| quartz sand | 48.0% |
| olivine sand | 23.0% |

| Briquette 2 comprising | |
|---|---|
| Cement | 9.0% |
| apatite | 20.0% |
| quartz sand | 37.0% |
| olivine sand | 22.0% |
| dolomite | 12.0%. |

Briquette 1 (IMT 1200°C) was used in an amount of 37% by weight of the total charge and Briquette 2 (IMT 1240°C) in an amount of 63% by weight of total charge.

The IMT (I) of a briquette having the overall briquette composition was 1,215°C.

The fibre making process was without problems and good quality products were produced.

In contrast when component (a) was used alone problems in the control of the process arose and good quality products were unobtainable.

### Example 2

### The process of Example 1 was carried out, using the following charge components:

Briquette 1 having the following composition [65% of total charge]:

| | |
|---|---|
| Cement | 12% |
| Ilmenite | 4.5% |
| Converter slag | 13% |
| Quartz sand | 45.5% |
| Olivine sand | 25% |

Briquette 2 having the following composition [35% of total charge]:

| | |
|---|---|
| Cement | 12% |
| Apatite | 32% |
| Quartz sand | 26% |
| Converter slag | 30% |

The IMT of Briquette 1 was 1180°C. The IMT of Briquette 2 was 1240°C.

The IMT (I) of a briquette having the overall briquette composition was 1,200°C.

Again the fibre making process was without problems and good quality products were produced.

### Example 3

The process of Example 1 was carried out, using the following charge component:

Briquette 1 having the following composition (50% of the total charge):

| | |
|---|---|
| Cement | 9% |
| Quartz sand | 45% |
| Iron silicate | 8% |
| Sodium borate | 20% |
| Calcinated soda | 18%. |

Briquette 2 having the following composition (50% of the total charge):

| | |
|---|---|
| Cement | 9% |
| Quartz sand | 44% |
| Olivine sand | 20% |
| Converter slag | 27%. |

The IMT of Briquette 1 was 1,000°C. The IMT of Briquette 2 was 1,260°C. The IMT of a briquette having the overall briquette composition was 1,100°C.

From this charge composition excellent fibres were produced.

## Claims

1. A method of making MMV fibres comprising melting in a furnace raw materials to produce a mineral melt and forming fibres from the melt,
in which the raw material charge includes a mixture of at least two types of briquette (a) and (b), of size at least 50 mm, each type of briquette having a different chemical analysis, and at least 30 wt% of the raw material charge is provided by briquettes (b)
and in which
(1) briquette (a) has an initial melting temperature of 1,240°C or below and briquette (b) has an initial melting temperature of 1,200°C or greater and the initial melting temperature of briquette (b) is at least 20°C greater than the initial melting temperature of briquette (a),
or
(2) the briquettes have an overall chemical analysis which when provided in the form of a single type of briquette gives an initial melting temperature (I), and in which briquettes (b) have an initial melting temperature which is at least 20°C greater than initial melting temperature (I).

2. A method according to claim 1 in which 70 to 90 wt% of the raw materials are provided in the form of briquettes.

3. A method according to claim 1 in which initial melting temperature (I) is 1,200°C or below.

4. A method according to any preceding claim in which the mixture comprises only two types of briquette.

5. A method according to any preceding claim in which substantially all of the briquettes have initial melting temperature at least 20°C above initial melting temperature (I).

6. A method according to any preceding claim in which the overall chemical analysis of the briquette mixture comprises iron in an amount of from 3 to 12 wt% and phosphorus in an amount of from 3 to 10 wt%.

7. A method according to any preceding claim in which the overall chemical analysis of the briquette mixture comprises alkali metal in an amount of 5 wt% or more.

8. A method according to any preceding claim in which the furnace is a shaft or cupola furnace, preferably a cupola furnace.

## Patentansprüche

1. Verfahren zur Herstellung von MMV-Fasern, umfassend das Schmelzen in einem Ofen von Rohmaterialien, um eine mineralische Schmelze herzustellen, und Bilden von Fasern aus der Schmelze,
worin die Rohmaterial-Charge eine Mischung von mindestens zwei Arten von Briketts (a) und (b) mit einer Größe von mindestens 50 mm beinhaltet, wobei jede Art von Brikett eine andere chemische Analyse aufweist, und mindestens 30 Gew.-% der Rohmaterial-Charge von Briketts (b) bereitgestellt werden, und worin
(1) Brikett (a) eine anfängliche Schmelztemperatur von 1240°C oder weniger und Brikett (b) eine anfängliche Schmelztemperatur von 1200°C oder mehr aufweist und die anfängliche Schmelztemperatur von Brikett (b) mindestens 20°C höher als die anfängliche Schmelztemperatur von Brikett (a) ist, oder
(2) die Briketts eine chemische Gesamtanalyse aufweisen, die, wenn sie in Form einer einzigen Art von Brikett bereitgestellt werden, eine anfängliche Schmelztemperatur (I) ergibt, und worin Briketts (b) eine anfängliche Schmelztemperatur aufweisen, die mindestens 20°C höher als die anfängliche Schmelztemperatur (I) ist.

2. Verfahren nach Anspruch 1, worin 70 bis 90 Gew.-% der Rohmaterialien in Form von Briketts bereitgestellt werden.

3. Verfahren nach Anspruch 1, worin die anfängliche Schmelztemperatur (I) 1200°C oder weniger beträgt.

4. Verfahren nach irgendeinem vorhergehenden Anspruch, worin die Mischung nur zwei Arten von Briketts umfaßt.

5. Verfahren nach irgendeinem vorhergehenden Anspruch, worin im wesentlichen alle Briketts eine anfängliche Schmelztemperatur aufweisen, die mindestens 20°C oberhalb der anfänglichen Schmelztemperatur (I) liegt.

6. Verfahren nach irgendeinem vorhergehenden Anspruch, worin die chemische Gesamtanalyse der Brikett-Mischung Eisen in einer Menge von 3 bis 12 Gew.-% und Phosphor in einer Menge von 3 bis 10 Gew.-% umfaßt.

7. Verfahren nach irgendeinem vorhergehenden Anspruch, worin die chemische Gesamtanalyse der Brikett-Mischung Alkalimetall in einer Menge von 5 Gew.-% oder mehr umfaßt.

8. Verfahren nach irgendeinem vorhergehenden Anspruch, worin der Ofen ein Schacht- oder Kupolofen, vorzugsweise ein Kupolofen, ist.

## Revendications

1. Procédé de fabrication de fibres MMV comprenant la fusion dans un four de matières premières pour produire une masse minérale en fusion et la formation de fibres à partir de la masse en fusion,
dans lequel la charge de matières premières comprend un mélange d'au moins deux types de briquettes (a) et (b) de dimension au moins 50 mm, chaque type de briquette présentant une analyse chimique différente et au moins 30 % en poids de la charge de matières premières sont fournis par les briquettes (b)
et dans lequel
(1) la briquette (a) présente une température de fusion initiale de 1 240°C ou inférieure et la briquette (b) présente une température de fusion initiale de 1 200°C ou supérieure et la température de fusion initiale de la briquette (b) est au moins 20°C supérieure à la température de fusion initiale de la briquette (a),
ou
(2) les briquettes présentent une analyse chimique globale qui lorsqu'elles sont fournies dans la forme d'un seul type de briquette fournit une température de fusion initiale (I), et dans lequel les briquettes (b) présentent une température de fusion initiale qui est au moins 20°C supérieure à la température de fusion initiale (I).

2. Procédé selon la revendication 1, dans lequel de 70 à 90 % en poids des matières premières sont fournis dans la forme de briquettes.

3. Procédé selon la revendication 1, dans lequel la température de fusion initiale (I) est de 1 200°C ou inférieure.

4. Procédé selon l'une quelconque des revendications précédentes, dans lequel le mélange comprend uniquement deux types de briquette.

5. Procédé selon l'une quelconque des revendications précédentes, dans lequel pratiquement la totalité des briquettes présente une température de fusion initiale d'au moins 20°C supérieure à la température de fusion initiale (I).

6. Procédé selon l'une quelconque des revendications précédentes, dans lequel l'analyse chimique globale du mélange de briquettes comprend du fer dans une quantité de 3 à 12 % en poids et du phosphore dans une quantité de 3 à 10 % en poids.

7. Procédé selon l'une quelconque des revendications précédentes, dans lequel l'analyse chimique globale du mélange de briquettes comprend un métal alcalin dans une quantité de 5 % en poids ou supérieure.

8. Procédé selon l'une quelconque des revendications précédentes dans lequel le four est un four à cuve ou de fonderie, de préférence un four de fonderie.
